# NEUE EUROPÄISCHE PATENTSCHRIFT

(11) **EP 1 425 154 B2**
(45) Veröffentlichungstag und Bekanntmachung des Hinweises auf die Entscheidung über den Einspruch: **08.07.2015**
(45) Hinweis auf die Patenterteilung: 09.11.2011
(21) Anmeldenummer: 02797982.2
(22) Anmeldetag: 11.09.2002
(51) Int. Cl.: B29C 49/64

(54) **VORRICHTUNG UND VERFAHREN ZUM TEMPERIEREN VON VORFORMLINGEN**
DEVICE AND METHOD FOR CONTROLLING THE TEMPERATURE OF PREFORMS
DISPOSITIF ET PROCEDE POUR REGULER LA TEMPERATURE DE PREFORMES

(30) Priorität: 11.09.2001 DE 10144537
(43) Veröffentlichungstag der Anmeldung: 09.06.2004
(73) Patentinhaber: Krones AG, 93068 Neutraubling (DE)
(72) Erfinder: VOTH, Klaus, 93083 Obertraubling (DE); ASBRAND, Helmut, 93077 Bad Abbach (DE); DEYERL, Heinrich, 92552 Teunz (DE)
(74) Vertreter: Grünecker Patent- und Rechtsanwälte PartG mbB
(86) Internationale Anmeldenummer: PCT/EP2002/010178
(87) Internationale Veröffentlichungsnummer: WO 2003/022551

(56) Entgegenhaltungen:
- EP-A- 0 947 304
- EP-A1- 0 511 617
- DE-A- 1 816 489
- JP-A- 06 198 719
- JP-A- 09 019 957
- JP-A- 57 117 929
- US-A- 3 439 380
- US-A- 3 934 743
- US-A- 4 285 657
- US-A- 4 564 497
- US-A- 5 232 641
- US-A- 5 256 341
- US-B2- 7 687 011
- PATENT ABSTRACTS OF JAPAN vol. 011, no. 278 (M-623), 9. September 1987 (1987-09-09) & JP 62 077919 A (MITSUBISHI PLASTICS IND LTD), 10. April 1987 (1987-04-10)
- PATENT ABSTRACTS OF JAPAN vol. 016, no. 235 (M-1257), 29. Mai 1992 (1992-05-29) & JP 04 049023 A (TOPPAN PRINTING CO LTD), 18. Februar 1992 (1992-02-18)
- PATENT ABSTRACTS OF JAPAN vol. 1995, no. 01, 28. Februar 1995 (1995-02-28) & JP 06 278196 A (NISSEI ASB MACH CO LTD), 4. Oktober 1994 (1994-10-04)
- PATENT ABSTRACTS OF JAPAN vol. 009, no. 215 (M-409), 3. September 1985 (1985-09-03) & JP 60 073830 A (KATASHI AOKI), 26. April 1985 (1985-04-26)

## Beschreibung

Die Erfindung betrifft eine Vorrichtung und ein Verfahren zum Temperieren von Vorformlingen bei der Herstellung von Flaschen oder dergleichen, die eine Temperiereinrichtung zum selektiven und direkten Temperieren von Vorformlingen umfasst.

Das Temperieren von Vorformlingen dient dazu, denjenigen Teil des Vorformlings, der bei einem Formblasprozess umgeformt werden soll, zu erwärmen und so seine Umformbarkeit zu gewährleisten. Der Vorformling, wie er im Folgenden verwendet wird, weist einen Kopfbereich mit einem Gewinde und einem Kragen auf, der nicht verformt wird und nicht erwärmt wird. Weiterhin weist der Vorformling einen zapfenförmigen Bereich auf, der bei dem Formblasprozess umgeformt wird. Der Begriff des Temperierens von Vorformlingen, wie er im Folgenden verwendet wird, bezieht sich auf das Temperieren des Bereichs, der umgeformt werden soll, also auf den zapfenförmigen Bereich.

Das selektive Temperieren von Vorformlingen dient dazu, verschiedene Bereiche in dem Vorformling auszubilden, die verschiedene Temperaturen aufweisen. Bei dem Umformprozess, bei dem aus dem Vorformling eine Flasche oder dergleichen hergestellt wird, dehnen sich die verschieden stark temperierten Bereiche verschieden stark aus. Zum einen ist es damit möglich, verschieden dicke Wandstärken in verschiedenen Bereichen der Flasche auszubilden. Zum anderen ist es bei ovalen oder rechteckigen oder sonstartig unsymmetrisch geformten Flaschen möglich, der unterschiedlich starken Dehnung des Vorformlingsmaterials während des Umformprozesses, wie es sich durch unsymmetrische Formen ergibt, durch die selektive Temperierung entgegen zu wirken, so dass große Unterschiede zwischen den Wandstärken vermieden werden können.

Eine gattungsgemäße Vorrichtung ist beispielsweise aus der US 4151249 bekannt. Hierbei werden von außen Vorformlinge selektiv temperiert, um Rippen in einer Flasche zu erzeugen. Das Temperieren kann entweder Erwärmen oder Kühlen sein.

Auch die DE 19608570 A1 zeigt eine gattungsgemäße Vorrichtung zum selektiven Temperieren von Vorformlingen.

Bei derartigen Vorrichtungen und Verfahren hat es sich als nachteilhaft herausgestellt, dass Vorformlinge mit dicken Wandstärken von mehreren mm von außen nur ungleichmäßig über die Wandstärke hinweg erwärmt werden können. Daher ergeben sich bei dem Formblasprozess große Spannungen innerhalb des Materials.

Wartezeiten, die einen Temperaturausgleich zwischen der Innen- und der Außenseite des Vorformlings ermöglichen, stehen hohen Durchsatzraten von Vorformlingen entgegen.

Die EP521773 B1 zeigt eine Möglichkeit, Vorformlinge von indirekt von innen zu erwärmen, indem ein Gegenstand in dem Vorformling angeordnet wird, und dieser von außen erwärmt wird.

Bei derartigen Vorrichtungen hat es sich als nachteilig herausgestellt, dass durch die indirekte Erwärmung des Vorformlings, d. h. die Erwärmung durch einen Gegenstand der selber geheizt werden muss, eine große Trägheit des System auftritt. Auf Änderungen der Heizleistung von außen reagiert der innenliegende Körper nur langsam, so dass die daraufhinfolgende Erwärmung oder Abkühlung des Vorformlings erst viel später eintritt.

Bei der Herstellung von Flaschen mit hohen Durchsatzraten, bei denen es kurzfristig zu Produktionsstops kommen kann, ist dies von großem Nachteil, da die einwirkende Heizleistung nicht schnell genug eingestellt wird.

Weiterhin ist aus der DE 28 52 061 A1 ein Verfahren bekannt, bei dem fertig hergestellte Flaschen von innen homogen gekühlt werden.

Ferner sind bereits verschiedene Vorrichtungen zum Temperieren von Vorformlingen bekannt, die zum Einbringen in die Vorformlinge ausgebildet sind und mittels Kühlkörper (JP-A-04049023), Gaseinlass- und Gasauslasskanälen (JP-A-6278196) oder elektrischen Heizkörpern (US-A-3934743) ein selektives Erwärmen oder Abkühlen der Vorformlinge vornehmen. Es handelt sich hierbei um zusätzliche Einrichtungen, aus denen die Vorformlinge entnommen und dann in eine Formblasvorrichtung überführt werden, die ggf. eine Reckstange aufweist (JP-A-6198719).

Schließlich ist durch die DE-A-1816489 eine Vorrichtung zum Herstellen von Hohlkörpern bekannt, bei der die Vorformlinge mittels speziell angeordneter Energiestrahler von außen her selektiv erwärmt und dann in einer Blasform mittels eines Blasdorns aufgeblasen werden. Der Blasdorn ist am Umfang mit Austrittsöffnungen für die Blas-Druckluft versehen; eine Reckstange ist nicht vorhanden.

Die JP-A-57117929 zeigt eine Vorrichtung zum schnellen Erwärmen von Vorformlingen durch Zuhilfenahme der Reckstange, wobei die Erwärmung aus Effizienzgründen sowohl durch Strahlung als auch durch Konvektion durchgeführt wird.

EP-A-0511617 offenbart eine Vorrichtung gemäß dem Oberbegriff des Anspruchs 1.

Aufgabe der vorliegenden Erfindung ist es daher, Vorformlinge so selektiv zu temperieren, dass hohe Durchsatzraten möglich sind und ovale oder rechteckige oder sonstige unsymmetrisch geformte Flaschen oder dergleichen geblasenen werden können.

Die Aufgabe wird durch eine Vorrichtung mit ihren Merkmalen des Anspruchs 1 und ein Verfahren mit den Merkmalen des Anspruchs 7 gelöst.

Bei der erfindungsgemäßen Vorrichtung ist es vorgesehen, eine Temperiereinrichtung zum Einbringen in das Innere von Vorformlingen vorzusehen. Dazu muss die Temperiereinrichtung eine derartige Gestalt haben, dass sie in den Vorformling eingeführt werden kann. Weiterhin müssen die Gasauslassöffnungen, die von der Temperiereinrichtung umfasst werden in den Vorformling eingeführt werden können. Weiterhin muss sie so beschaffen sein, dass sie den Vorformling von innen temperieren kann. Die Temperiereinrichtung ist selektiv und direkt temperierend ausgestaltet. Dies bedeutet, dass verschiedene Bereiche des Vorformlings verschieden temperiert werden können. Temperieren bedeutet das Abkühlen.

Die erfindungsgemäße Integration der Temperiereinrichtung, zumindest teilweise in die Reckstange, hat den Vorteil, dass kein zusätzliches Element ausgebildet werden muss, dass in den Vorformling eingebracht wird, da eine Reckstange einer Formblasvorrichtung ohnehin dazu ausgelegt ist, in einen Vorformling eingeführt zu werden. Die Zusammenfassung der Reckstange und der Temperiereinrichtung in einem Bauteil erlaubt so eine kompakte und kostengünstige Ausbildung der erfindungsgemäßen Vorrichtung.

Das direkte Temperieren bedeutet, dass die Temperiereinrichtung selber direkt die Temperierung des Vorformlings ausführt, ohne über die Temperierung von Zwischenelementen zu gehen. Dies beinhaltet das Beaufschlagen des Vorformlings mit Gas, das relativ zu der Temperatur des Vorformlings erniedrigte Temperatur aufweist.

Eine vorteilhafte Ausführungsform der erfindungsgemäßen Vorrichtung besteht darin, die Temperiereinrichtung so auszubilden, dass die Vorformlinge in Zonen entlang und/oder quer zu und/oder schräg zu der Vorformlingsachse temperiert werden können. Die Vorformlingsachse ist diejenige Achse des Vorformlings, die in der längsten Ausdehnung, in der Mitte des Vorformlings liegt.

Durch das erfindungsgemäße Beaufschlagen der Vorformlinge mit gekühltem Gas, insbesondere Luft, kann in sehr kurzer Zeit die selektive Temperierung des Vorformlings durchgeführt werden.

Eine weitere, vorteilhafte Ausführungsform der Erfindung besteht darin, mindestens eine Gaseinlassöffnung zum Aufnehmen von Gas aus dem Vorformling bei der Temperiereinrichtung vorzusehen. Durch eine derartige Gaseinlassöffnung kann das gekühlte Gas, nachdem es den Vorformling beaufschlagt hat, direkt wieder in die Temperiereinrichtung aufgenommen werden. Dadurch wird das Kühlen von Stellen des Vorformlings, die nicht gekühlt werden sollen, an denen das Gas aber dennoch vorbeiströmt, vermieden.

Vorteilhafte Ausführungsformen der Gaseinlassöffnung und/oder der Gasauslassöffnungen sind Schlitze, Bohrungen, Düsen oder sonstige Ausnehmungen in der Temperiereinrichtung. Schlitze erlauben einen hohen Gasdurchsatz sowie eine homogene Temperierung der Vorformlingsfläche, die dem Gasstrom ausgesetzt ist, der den Schlitz verläßt. Bohrungen sind relativ einfach und kostengünstig zu erstellen. Düsen haben den Vorteil, dass sich ein gut gerichteter Gasstrahl ausbilden läßt, mit dem stark selektiv temperiert werden kann. Eine vorteilhafte Ausführungsform der Erfindung besteht darin, mehrere Gaseinlassöffnungen und/oder mehrere Gasauslassöffnungen auf Kreisen und/oder Linien anzuordnen. Durch derartige Anordnungen von Gasein- bzw. auslassöffungen ist es möglich, kreis- bzw. linienförmige Bereiche des Vorformlings selektiv zu temperieren.

Eine besonders vorteilhafte Ausführungsform der Erfindung besteht darin, dass die Temperiereinrichtung ein erstes und ein zweites Rohrelement umfasst. Die beiden Rohrelemente sind gegeneinander beweglich, insbesondere verdrehbar und/oder verschiebbar. Die beiden Rohrelemente haben jeweils Anordnungen von Gasauslassöffnungen, die in verschiedenen Positionen der beiden Rohrelemente zueinander in Überlapp gebracht werden können. Durch Verstellen der beiden Rohrelelmente gegeneinander ist es möglich, verschiedene Gasaustrittskonfigurationen zu erzeugen, mit denen beispielsweise bei einer Anordnung ein selektives Temperieren durchgeführt werden kann und bei einer zweiten Anordnung ein gleichmäßiges Temperieren durchgeführt werden kann. Bei dem selektiven Temperieren findet ein Gasauslass nur in bestimmten stark begrenzten Bereichen der Temperiereinrichtung statt, so dass der Vorformling nur in bestimmten stark begrenzten Bereichen mit Gas beaufschlagt wird. Ein gleichmäßiges Temperieren wird dadurch erreicht, dass an vergleichsweise vielen Stellen über die Temperiereinrichtung ein Gasaustritt stattfindet, so dass der Vorformling im Wesentlichen in allen Bereichen mit Gas beaufschlagt wird. Auch wird sich ein homogenes Temperieren immer dann einstellen, wenn der Abstand zwischen den Gasauslassöffnungen und der Vormformlingswand groß ist, so dass sich der austretende Gasstrom stark aufweiten kann.

Vorteilhafte Ausführungsformen des Verfahrens sind in den abhängigen Ansprüchen des Verfahrensanspruchs 7 offenbart.

Besonders vorteilhafte Ausführungsformen des erfindungsgemäßen Verfahrens bestehen darin, dass mit der Temperiereinrichtung fertig hergestellte Flaschen gekühlt werden. Dies ist insbesondere bei sogenannten "Hotfill"-Flaschen von Vorteil.

Eine weitere vorteilhafte Ausführungsform des Verfahrens besteht darin, zunächst die Reckstange in einen gleichmäßig vorgewärmten Vorformling einzuführen. Anschließend wird durch selektives Temperieren des Vorformlings mittels der Temperiereinrichtung in der Reckstange der Vorformling selektiv temperiert. Dabei wird die Reckstange relativ zu dem Vorformling nicht bewegt. Anschließend wird das Recken und Formblasen des Vorformlings durchgeführt, wobei die Reckstange zum Recken des Vorformlings eingesetzt wird.

Im Folgenden werden Ausgestaltung der erfindungsgemäßen Vorrichtung sowie des erfindungsgemäßen Verfahrens anhand der beiliegenden Figuren erläutert.

Dabei zeigt:
Fig. 1 eine schematische Darstellung einer Ausführungsform der erfindungsgemäßen Vorrichtung,
Fig. 2 schematische Darstellungen weiteren Ausführungsformen der erfindungsgemäßen Vorrichtung,
Fig. 3 eine schematische Darstellung einer Ausführungsform des erfindungsgemäßen Verfahrens,
Fig. 4 eine schematische Darstellung einer erfindungsgemäßen Ausführungsform der Erfindung zusammen mit einem Vorformling und einer fertig hergestellten Flasche,
Fig. 5 eine schematische Schnittzeichnung der erfindungsgemäßen Vorrichtung zusammen mit einer rechteckigen Blasform,
Fig. 6 eine weitere Ausführungsform der erfindungsgemäßen Vorrichtung,
Fig. 7 eine schematische Zeichnung der Anordnung einer Vorrichtung, die bei der Herstellung von Flaschen eingesetzt werden.

In Fig. 1 ist ein Vorformling 2 dargestellt, der in seinem oberen Bereich ein Gewinde sowie einen Kragen aufweist. Der untere zapfenförmige Bereich, der unterhalb des Kragens angeordnet ist, wird bei einem Formblasprozess umgeformt, so dass insgesamt eine Flasche hergestellt wird. Um diesen unteren, zapfenförmigen Bereich selektiv vorzuwärmen, ist eine Temperiereinrichtung 1 in dem Vorformling 2 angeordnet, die in den Richtungen 12 in den Vorformling 2 ein- und ausgeführt werden kann. Die Temperiereinrichtung 1 umfasst Gasauslassöffnungen 3, mit denen Gas entlang den Richtungen 11 in Richtung der Vorformlingswand 2 geleitet werden kann. Durch das Beaufschlagen des Vorformlings 2 mit dem Gas entlang den Richtungen 11 wird der Vorformling 2 in den Zonen 10 selektiv und direkt temperiert. Beim Temperieren handelt es sich erfindungsgemäß um ein Kühlen, wobei ein Gas verwendet wird, dass eine Temperatur hat, die im Vergleich zu der Temperatur des Vorformlings erniedrigt ist. Eine Gasheizeinrichtung kann dazu vorgesehen sein, das Gas, das aus der Temperiereinrichtung 1 austritt zu heizen. Diese Gasheizeinrichtung kann sowohl in der Temperiereinrichtung selber als auch in oder bei einer Gaszuleitung zu der Temperiereinrichtung 1 vorgesehen sein.

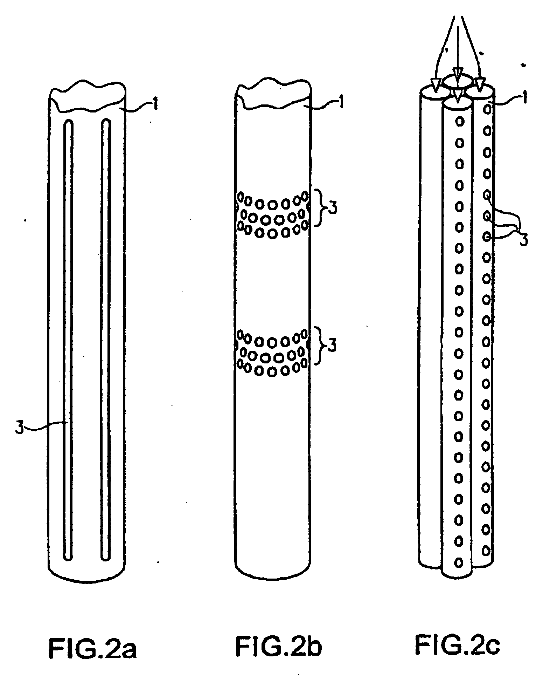

In Fig. 2 sind spezielle Ausführungsformen der erfindungsgemäßen Temperiereinrichtung 1 dargestellt. In Fig. 2a ist ein Rohrstück 1 vorgesehen, in dem Gasauslassöffnungen in Form von Schlitzen 3 angeordnet sind, durch die das Gas austreten kann. In Fig. 2b sind zwei kreisförmige Bereiche mit Gasauslassöffnungen 3 vorgesehen, durch die der Vorformling mit Gas beaufschlagt werden kann. In Fig. 2c sind mehrere Rohrstücke zu einem Bündel zusammengefasst, um so die Temperiereinrichtung 1 zu ergeben. An jedem der Rohrstücke sind Gasauslassöffnungen 3 vorgesehen, mit denen der Vorformling mit Gas beaufschlagt werden kann. Jede der Öffnungen, die in Fig. 2 dargestellt sind, kann auch dazu benutzt werden, das durch eine Gasauslassöffnung 3 ausgegebene Gas aus dem Vorformling wieder in die Temperiereinrichtung 1 aufzunehmen. Dadurch können bestimmte Strömungsprofile erzeugt werden, um so scharf begrenzte Zonen des Vorformlings 2 zu temperieren.

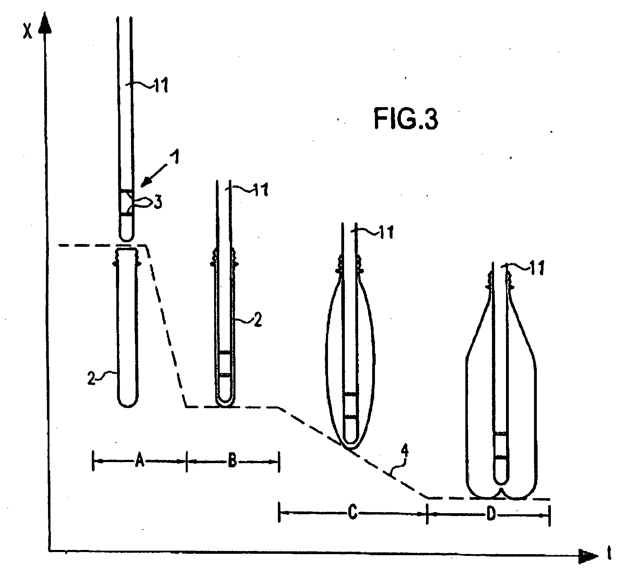

In Fig. 3 ist eine erfindungsgemäße Ausgestaltung des erfindungsgemäßen Verfahrens skizziert. Dabei wird eine Ausführungsform der erfindungsgemäßen Vorrichtung benutzt, bei der die Temperiereinrichtung 1 in die Reckstange 11 integriert ist.

In einem ersten Schritt A wird die Temperiereinrichtung 1 mit kreisförmig angeordneten Gasauslassöffnungen 3 in einen gleichmäßig vorgewärmten Vorformling 2 eingefahren. Die Linie 4 gibt hierbei die Position x als Funktion der Zeit t an, an der sich das untere Ende der Temperiereinrichtung 1 befindet. Nach dem Einführen A wird die Temperiereinrichtung 1 relativ zu dem Vorformling 2 eine zeitlang nicht bewegt (Schritt B). In dieser Zeit wird Kühlluft durch die Gasauslassöffnungen 3 ausgeblasen, mit denen der Vorformling 2 selektiv temperiert wird. In einer möglichen Ausführungsform des erfindungsgemäßen Verfahrens wird die Temperiereinrichtung 1 nach dem Schritt B aus dem Vorformling 2 wieder herausgefahren (in Fig. 3 nicht dargestellt), wodurch das Verfahren des selektiven Temperierens abgeschlossen ist.

Eine weitere mögliche Ausführungsform des erfindungsgemäßen Verfahrens besteht darin, mit der Temperiereinrichtung 1 in dem Schritt C den selektiv vorgewärmten Vorformling zu recken. Dies bedeutet, dass die Temperiereinrichtung 1 weiter nach unten fährt, wodurch der Vorformling 2 gereckt wird. Durch das Einleiten von Formblasprozessgas in den Vorformling 2 wird das Vorformlingsmaterial nach außen gegen eine in Fig. 3 nicht dargestellte Blasform gedrückt, wodurch sich die endgültige, äußere Flaschenform ergibt. Das Formblasprozessgas kann durch die obere Öffnung des Vorformlings an der Reckstange 11 vorbei oder auch durch die Reckstange in den Vorformling eingebracht werden.

Eine weitere mögliche Ausführungsform des erfindungsgemäßen Verfahrens besteht darin, in einem an den Schritt C nachfolgenden Schritt D die fertig hergestellte Flasche von innen mit Kühlgas zu beaufschlagen, um so ein gleichmäßiges Kühlen der fertig hergestellten Flasche zu erreichen.

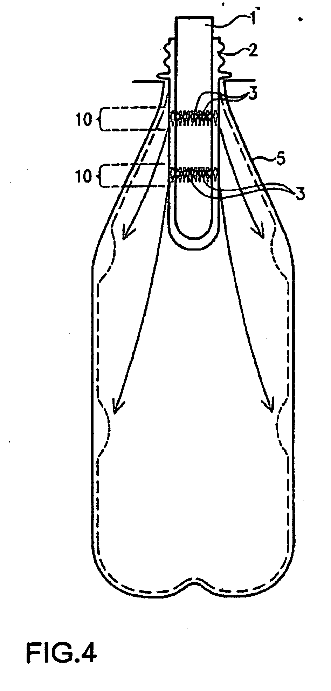

In Fig. 4 ist der Anfangs- sowie der Endzustand des Vorformlings 2, sowie der der fertig hergestellten Flasche, wie sie in dem in Fig. 3 dargestellten Verfahren auftreten können, gezeigt. In dem Vorformling 2 befindet sich die Temperiereinrichtung 1, in der Gasauslassöffnungen 3 vorgesehen sind, mit denen die Zonen 10 des Vorformlings 2 gekühlt werden. Durch die Kühlung ergibt sich eine höhere Zähigkeit des Materials des Vorformlings in den Zonen 10 im Vergleich zu den die Zonen 10 umgebenden Teilen des Vorformlings 2. Die in Fig. 4 dargestellte Blasform 5 gibt die äußere Form der fertig hergestellten Flasche vor.

Bei dem Formblasprozess, wie er in Schritt C in Fig. 3 dargestellt ist, wird aus dem in Fig. 4 dargestellten Vorformling 2, die in Fig. 4 dargestellte Flasche, hergestellt, wobei nur die Innenseite der Flasche und zwar gestrichelt dargestellt ist. Die Außenseite der Flasche ist durch die Blasform 5 vorgegeben. Durch die erhöhte Zähigkeit der Zonen 10 des Vorformlings 2 werden diese bei dem Formblasprozess weniger stark gedehnt als die übrigen Bereiche. Dadurch ergeben sich die in Fig. 4 dargestellten Wülste der fertig hergestellten Flasche, die die Flasche ringförmig umgeben. Derartige Wülste können dazu geeignet sein, die Stabilität der Flasche in besonderen Bereichen, beispielsweise bei denen die Flasche gegriffen werden soll, zu erhöhen.

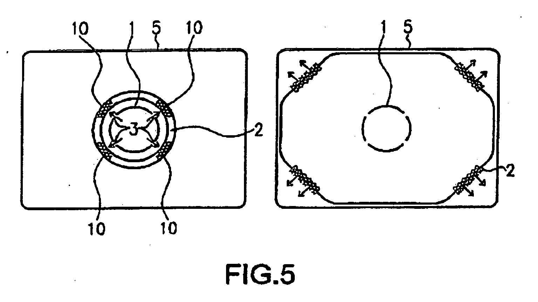

In Fig. 5 ist dargestellt, wie mit dem erfindungsgemäßen Verfahren und der erfindungsgemäßen Vorrichtung vorteilhafter Weise eine Flasche mit einer rechteckigen Form hergestellt wird. Dabei ist eine Schnittansicht dargestellt, wie sie sich bei einem horizontalen Schnitt durch die Vorrichtung in Fig.1 ergeben würde. In Fig. 5 links ist ein Vorformling 2 mit gekühlten Zonen 10 dargestellt, in dem sich eine Temperiereinrichtung 1 mit Gasauslassöffnungen 3 befindet. Den Vorformling 2 umgibt die rechteckige Blasform 5.

Durch den Formblasprozess wird der Durchmesser des Vorformlings 2 erweitert, wie in Fig. 5, rechts dargestellt. Diejenigen Bereiche des Vorformlings 2, die mit der Blasform 5 in Kontakt treten, werden bei dem Formblasprozess weniger stark gedehnt als diejenigen Bereiche, die sich weiter entsprechend den Pfeilen in Fig. 5, rechts in die Ecken hineinstrecken können. Dadurch, dass diejenigen Zonen 10, die in die Ecken hineingestreckt werden vorher gekühlt wurden, wurden sie bei dem anfänglichen Teil des Formblasprozesses nur wenig gestreckt. Dadurch ist noch genügend Materialstärke in denjenigen Bereichen vorhanden, die dann bei dem Strecken in die Ecken der Blasform hinein ausgedünnt wird. Dadurch kann trotz der rechteckigen Form der Blasform 5 eine Flasche hergestellt werden, die eine gewünschte gleichmäßige oder gewünschte ungleichmäßige Dickenverteilung entlang ihres Umfangs aufweist.

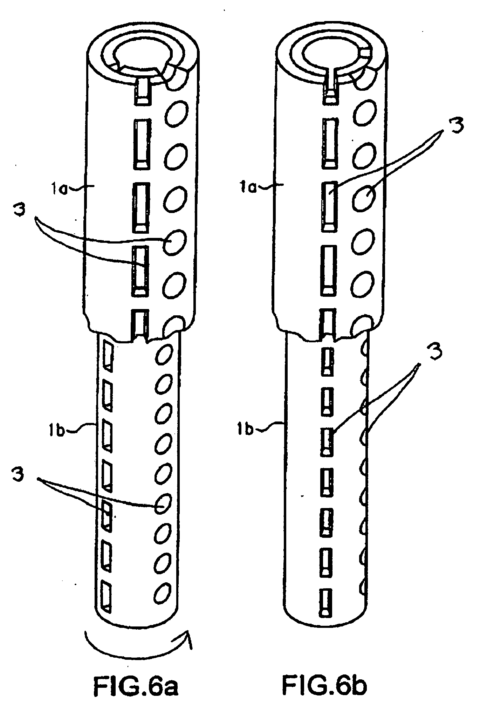

Eine besonders vorteilhafte Ausführungsform der erfindungsgemäßen Vorrichtung ist in Fig. 6 dargestellt. In Fig. 6a ist eine Temperiereinrichtung 1 gezeigt, die zwei rohrförmige Elemente 1a und 1b umfasst. In beiden Rohrelementen sind Bohrungen oder Anordnungen von Schlitzen oder ähnliche Gasauslassöffnungen 3 vorgesehen. In Fig. 6a sind die beiden Elemente 1a und 1b so angeordnet, dass wie in Fig. 6a ganz oben dargestellt, die ovalen Gasauslassöffnungen 3 rechts in Fig. 6a überlappen. Falls sich das Innere der Rohrstöcke unter einem erhöhten Luftdruck befindet, kann dieses durch die überlappenden Öffnungen des Elements 1b und 1a nach außen ausströmen und den Vorformling, der in Fig. 6a der übersichtlichkeitshalber nicht dargestellt ist, mit Gas beaufschlagen. Die schlitzartigen Öffnungen überlappen sich nicht, so dass durch diese Öffnungen kein Gas nach außen austritt.

In Fig. 6b ist im Vergleich zu Fig. 6a das innere Rohrstück 1b leicht nach rechts gedreht worden. Dadurch überlappen nun die schlitzförmigen Öffnungen der Elemente 1a und 1b, so dass durch diese Gas nach außen austreten kann, falls im Inneren der Elemente 1a und 1b ein Gasüberdruck herrscht. Mit dem austretenden Gas wird der Vorformling mit Gas beaufschlagt. Die runden oder ovalen Öffnungen der Elemente 1a und 1b haben in Fig. 6b keinen Überlapp, so dass durch diese Öffnungen kein Gas nach außen austreten wird.

Das Element 1a ist in Fig. 6a und 6b nicht vollständig dargestellt, so dass im unteren Bereich der Figuren das Element 1b sichtbar wird. Das Element 1a ist somit auch im unteren Bereich der Fig. 6a und 6b entsprechend zu ergänzen.

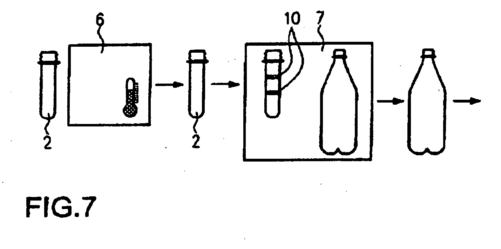

In Fig. 7 ist eine mögliche Ausführungsform der erfindungsgemäßen Vorrichtung sowie des erfindungsgemäßen Verfahrens skizziert. Eine Vorwärmeinrichtung 6 dient dazu, die Vorformlinge 2 gleichmäßig zu erwärmen. In der Regel betrifft die Erwärmung im Wesentlichen den unteren zapfenförmigen Bereich, der bei dem Formblasprozess umgeformt werden soll. Der Kragen und der Bereich des Gewindes im oberen Bereich des Vorformlings 2 werden nicht vorgewärmt.

In einer Formblasvorrichtung 7 ist die Temperiereinrichtung 1 integriert, mit der die vorgewärmten Vorformlinge selektiv temperiert werden. Die selektiv temperierten Zonen 10 sind in Fig. 7 schematisch dargestellt. Mit der Vorrichtung 7 wird dann mittels Formblasens eine Flasche hergestellt und ausgegeben.

## Patentansprüche

1. Vorrichtung zum Temperieren von Vorformlingen (2), die eine Temperiereinrichtung (1) mit Kühlmitteln (3) umfasst, die zumindest teilweise in die Reckstange (11) einer Formblasvorrichtung (7) integriert sind, wobei die Vorformlinge im oberen Bereich ein Gewinde und einen Kragen aufweisen, die nicht verformt werden und die nicht erwärmt sind, und unterhalb des Kragens einen erwärmten zapfenförmigen Bereich aufweisen, der umgeformt wird, **dadurch gekennzeichnet, dass** die Temperiereinrichtung (1) mit Kühlmitteln mindestens eine Gasleiteinrichtung und Gasauslassöffnungen (3) umfasst, die so ausgebildet sind, dass Vorformlinge (2) in Zonen (10) entlang der Vorformlingsachse durch Beaufschlagung der Vorformlinge (2) mit gekühltem Gas selektiv und direkt gekühlt werden können.

2. Vorrichtung nach Anspruch 1, **dadurch gekennzeichnet, dass** die Kühleinrichtung (3) so ausgebildet ist, dass die Vorformlinge (2) zusätzlich in Zonen quer oder schräg zu der Vorformlingsachse gekühlt werden können.

3. Vorrichtung nach Anspruch 2, **dadurch gekennzeichnet, dass** die Kühleinrichtung (1) mindestens eine Gaseinlassöffnung zum Aufnehmen von Gas aus den Vorformlingen umfasst.

4. Vorrichtung nach einem der Ansprüche 1 bis3, **dadurch gekennzeichnet, dass** die Gaseinlassöffnung (3) und/oder Gasauslassöffnung durch einen Schlitz (3), eine Bohrung (3), eine Düse (3) oder sonstige Ausnehmungen (3) ausgebildet ist.

5. Vorrichtung nach einem der Ansprüche 1 bis 4, **dadurch gekennzeichnet, dass** mehrere Gaseinlassöffnungen (3) und/oder mehrere Gasauslassöffnungen auf Linien angeordnet sind.

6. Vorrichtung nach einem der Ansprüche 1 bis 5, **dadurch gekennzeichnet, dass** die Kühleinrichtung mindestens ein erstes (1a) und ein zweites Rohrelement (2b) umfasst, die gegeneinander beweglich sind, wobei die Gasauslassöffnungsanordnung des ersten Rohrelementes (1a) in einer ersten relativen Position der gegeneinander beweglichen Rohrelemente so mit der Gasauslassöffnungsanordnung des zweiten Rohrelements (1 b) zum Überlapp kommt, dass das selektive Kühlen durchgeführt werden kann und die Gasauslassöffnungsanordnung des ersten Rohrelementes (1a) in einer zweiten relativen Position der gegeneinander beweglichen Rohrelemente so mit der Gasauslassöffnungsanordnung des zweiten Rohrelements (1b) zum Überlapp kommt, dass ein gleichmäßiges Kühlen durchgeführt werden kann.

7. Verfahren zum Temperieren von Vorformlingen (2), wobei die Vorformlinge im oberen Bereich ein Gewinde und eine Kragen aufweisen, die nicht verformt werden und die nicht erwärmt werden, und unterhalb des Kragens einen zapfenförmigen Bereich aufweisen, der erwärmt wird, bei dem die Vorformlinge mit einer Reckstange (11), wie sie bei einem Formblasprozess benutzt wird, direkt von innen gekühlt werden, wobei die Vorformlinge in Zonen (10) entlang der Vorformlingsachse selektiv gekühlt werden **dadurch gekennzeichnet, dass** die Vorformlinge (2) zum selektiven Kühlen mit gekühltem Gas insbesondere Luft, durch Gasauslassöffnungen (3) beaufschlagt werden.

8. Verfahren nach Anspruch 7, **dadurch gekennzeichnet, dass** die Vorformlinge (2) zusätzlich in Zonen quer oder schräg zu der Vorformlingsachse gekühlt werden können.

10. Verfahren nach Anspruch 8 oder 9, **dadurch gekennzeichnet, dass** Gas aus den Vorformlingen (2) in die Kühleinrichtung (1) aufgenommen wird.

11. Verfahren nach einem der Ansprüche 8 bis 10, **dadurch gekennzeichnet, dass** das Beaufschlagen mit dem gekühlten/geheizten Gas dadurch geschieht, dass das Gas durch eine erste Gasauslassöffnungsanordnung eines ersten Rohrelementes (1a) ausgegeben wird, wobei das erste Rohrelement (1a) ein zweites Rohrelement (1 b) mit einer zweiten Gasauslassöffnungsanordnung umgibt, wobei die Gasauslassöffnungsanordnungen des ersten (1a) und zweiten Rohrelementes (1b) in einer ersten relativen Position des ersten und zweiten Rohrelements zumindest teilweise zum Überlapp kommen, und anschließend das erste Rohrelement (1a) und des zweite Rohrelement (1 b) in eine zweite relative Position zueinander gebracht werden, bei der die Gasauslassöffnungsanordnung des ersten (1a) und zweiten Rohrelements (1b) zumindest teilweise zum Überlapp kommen, so dass ein gleichmäßiges Kühlen durchgeführt werden kann.
wobei das erste Rohrelement (1a) ein zweites Rohrelement (1 b) mit einer zweiten Gasauslassöffnungsanordnung umgibt, wobei die Gasauslassöffnungsanordnungen des ersten (1a) und zweiten Rohrelementes (1b) in einer ersten relativen Position des ersten und zweiten Rohrelements zumindest teilweise zum Überlapp kommen, und anschließend das erste Rohrelement (1a) und des zweite Rohrelement (1b) in eine zweite relative Position zueinander gebracht werden, bei der die Gasauslassöffnungsanordnung des ersten (1a) und zweiten Rohrelements (1 b) zumindest teilweise zum Überlapp kommen, so dass ein gleichmäßiges Kühlen durchgeführt werden kann.

## Claims

1. Device for tempering preforms (2), comprising a tempering device (1) with cooling means (3) which are at least partially integrated in the stretching rod (11) of a mould blowing device (7), the preforms having a thread and a collar in the top region which are not deformed and which are not heated and a heated, finger-shaped region below the collar which is deformed, **characterised in that** the tempering device (1) with cooling means comprises at least one gas conveying means and gas outlet openings (3) which are configured so that preforms (2) can be cooled selectively and directly in zones (10) along the preform axis by applying cooled gas to the preforms (2).

2. Device as claimed in claim 1, **characterised in that** the cooling device (3) is configured so that the preforms (2) can also be cooled in zones that are transverse or inclined relative to the preform axis.

3. Device as claimed in claim 2, **characterised in that** the cooling device (1) comprises at least one gas inlet opening for receiving gas from the preforms.

4. Device as claimed in one of claims 1 to 3, **characterised in that** the gas inlet opening (3) and/or gas outlet opening is formed by a slot (3), a bore (3), a nozzle (3) or other recesses (3).

5. Device as claimed in one of claims 1 to 4, **characterised in that** a plurality of gas inlet openings (3) and/or a plurality of gas outlet openings are arranged on lines.

6. Device as claimed in one of claims 1 to 5, **characterised in that** the cooling device comprises at least a first (1a) and a second pipe element (2b) which are movable against each other, wherein the gas outlet opening arrangement of the first pipe element (1a) overlaps the gas outlet opening arrangement of the second pipe element (1b) in a first relative position of the pipe elements movable against each other in such a manner that selective cooling can be carried out, and the gas outlet opening arrangement of the first pipe element (1a) overlaps the gas outlet opening arrangement of the second pipe element (1b) in a second relative position of the pipe elements movable against each other in such a manner that uniform cooling can be carried out.

7. Method of tempering preforms (2), the preforms having a thread and a collar in the top region which are not deformed and which are not heated and a finger-shaped region below the collar which is heated, whereby the preforms are cooled directly from the inside with a stretching rod (11) such as that used in a mould blowing process, and the preforms are selectively cooled in zones (10) along the preform axis, **characterised in that** the preforms (2) are loaded for selective cooling with cooled gas, particularly air, through gas outlet openings (3).

8. Method as claimed in claim 7, **characterised in that** the preforms (2) can also be cooled in zones that are transverse or inclined relative to the preform axis.

10. Method as claimed in claim 8 or 9, **characterised in that** gas is received from the preforms (2) into the cooling device (1).

11. Method as claimed in one of claims 8 to 10, **characterised in that** the loading with the cooled/heated gas takes place when the gas is discharged through a first gas outlet opening arrangement of a first pipe element (1a), and the first pipe element (1a) surrounds a second pipe element (1b) having a second gas outlet opening arrangement, and the gas outlet opening arrangements of the first (1a) and second pipe elements (1b) overlap at least partially in a first relative position of the first and second pipe elements, and the first pipe element (1a) and the second pipe element (1b) are then brought into a second relative position to each other in which the gas outlet opening arrangement of the first (1a) and second pipe elements (1b) overlap at least partially so that uniform cooling can be carried out,
and the first pipe element (1a) surrounds a second pipe element (1b) having a second gas outlet opening arrangement, and the gas outlet opening arrangements of the first (1a) and second pipe elements (1b) overlap at least partially in a first relative position of the first and second pipe elements, and the first pipe element (1a) and the second pipe element (1b) are then brought into a second relative position to each other in which the gas outlet opening arrangement of the first (1a) and second pipe elements (1b) overlap at least partially so that uniform cooling can be carried out.

## Revendications

1. Dispositif pour équilibrer en température ou tempérer des pré-ébauches ou préformes (2), comprenant une installation d'équilibrage de température (1) munie de moyens de refroidissement (3) intégrés au moins en partie à la canne d'étirage (11) d'un dispositif de moulage ou formage par soufflage (7), les pré-ébauches comportant, dans la zone supérieure, un filetage et une collerette, qui ne vont pas être déformés et ne sont pas chauffés, et comportant, sous la collerette, une zone en forme de tourillon, chauffée, qui va être déformée, **caractérisé en ce que** l'installation d'équilibrage en température (1) munie de moyens de refroidissement comporte au moins une installation de guidage de gaz et des orifices de sortie de gaz (3), qui sont réalisés pour refroidir sélectivement et directement les pré-ébauches (2) sur des zones (10) le long de l'axe de la pré-ébauche, en alimentant et sollicitant les pré-ébauches (2) en gaz refroidi.

2. Dispositif selon la revendication 1, **caractérisé en ce que** l'installation de refroidissement (3) est réalisée pour permettre de refroidir les pré-ébauches (2) en plus dans des zones transversalement ou en biais par rapport à l'axe de la pré-ébauche.

3. Dispositif selon la revendication 2, **caractérisé en ce que** l'installation de refroidissement (1) comporte au moins un orifice d'entrée de gaz pour recueillir du gaz des pré-ébauches.

4. Dispositif selon l'une des revendications 1 à 3, **caractérisé en ce que** l'orifice d'entrée de gaz (3) et/ou l'orifice de sortie de gaz sont réalisés par une fente (3), un perçage (3), une buse (3) ou d'autres cavités ou évidements (3).

5. Dispositif selon l'une des revendications 1 à 4, **caractérisé en ce que** plusieurs orifices d'entrée de gaz (3) et/ou plusieurs orifices de sortie de gaz sont agencés ou répartis sur des lignes.

6. Dispositif selon l'une des revendications 1 à 5, **caractérisé en ce que** l'installation de refroidissement comporte au moins un premier élément tubulaire (1a) et un second élément tubulaire (2b) mobiles l'un par rapport à l'autre,
la disposition des orifices de sortie du premier élément tubulaire (la), dans une première position relative des éléments tubulaires mobiles l'un par rapport à l'autre, chevauche la disposition des orifices de sortie de gaz du second élément tubulaire (1b) de manière à pouvoir effectuer le refroidissement sélectif, et
la disposition des orifices de sortie du premier élément tubulaire (la), dans une seconde position relative des éléments tubulaires mobiles l'un par rapport à l'autre, chevauche la disposition des orifices de sortie de gaz du second élément tubulaire (1b) de manière à pouvoir effectuer un refroidissement uniforme régulier.

7. Procédé pour équilibrer en température ou tempérer des pré-ébauches ou préformes (2),
d'après lequel les pré-ébauches comportent, dans la zone supérieure, un filetage et une collerette, qui ne vont être ni déformés, ni chauffés, et comportent, sous la collerette, une zone en forme de tourillon, qui va être chauffée,
d'après lequel on refroidit les pré-ébauches directement de l'intérieur à l'aide d'une canne d'étirage (11) telle qu'utilisée dans le cadre d'un processus de moulage ou formage par soufflage,
d'après lequel on refroidit les pré-ébauches de manière sélective dans des zones (10) le long de l'axe de la pré-ébauche,
**caractérisé en ce que** pour leur refroidissement sélectif, les pré-ébauches (2) sont alimentées et sollicitées par un gaz refroidi, notamment de l'air, à travers des orifices de sortie de gaz (3).

8. Procédé selon la revendication 7, **caractérisé en ce que** les pré-ébauches (2) peuvent être refroidies en plus dans des zones transversalement ou en biais par rapport à l'axe de la pré-ébauche.

10. Procédé selon la revendication 8 ou la revendication 9, **caractérisé en ce que** du gaz en provenance des pré-ébauches (2) est recueilli par l'installation de refroidissement (1).

11. Procédé selon l'une des revendications 8 à 10, **caractérisé en ce que** l'alimentation et la sollicitation avec le gaz refroidi/chauffé consiste à faire passer le gaz à travers une première disposition d'orifices de sortie de gaz d'un premier élément tubulaire (la),
ce premier élément tubulaire (1a) entourant un second élément tubulaire (1b) muni d'une seconde disposition d'orifices de sortie de gaz,
les dispositions d'orifices de sortie de gaz du premier élément tubulaire (1a) et du second élément tubulaire (1b), dans une première position relative du premier et du second élément tubulaire, se chevauchant au moins partiellement, et le premier élément tubulaire (1a) et le second élément tubulaire (1b) étant ensuite amenés dans une seconde position relative l'un par rapport à l'autre, pour laquelle les dispositions d'orifices de sortie de gaz du premier élément tubulaire (1a) et du second élément tubulaire (1b) se chevauchent au moins en partie, de manière à pouvoir effectuer un refroidissement uniforme régulier,
ce premier élément tubulaire (1a) entourant un second élément tubulaire (1b) muni d'une seconde disposition d'orifices de sortie de gaz, les dispositions d'orifices de sortie de gaz du premier élément tubulaire (1a) et du second élément tubulaire (1b), dans une première position relative du premier et du second élément tubulaire, se chevauchant au moins partiellement, et le premier élément tubulaire (1a) et le second élément tubulaire (1b) étant ensuite amenés dans une seconde position relative l'un par rapport à l'autre, pour laquelle les dispositions d'orifices de sortie de gaz du premier élément tubulaire (1a) et du second élément tubulaire (1b) se chevauchent au moins en partie, de manière à pouvoir effectuer un refroidissement uniforme régulier.
